# EUROPEAN PATENT APPLICATION

(11) **EP 4 635 721 A1**
(43) Date of publication of application: **22.10.2025**
(21) Application number: 24171108.4
(22) Date of filing: 18.04.2024
(51) Int. Cl.: B29C 70/20, B29C 70/38, B29C 70/32, B29L 31/00

(54) **TAPE STRUCTURE FOR USE IN AN AUTOMATED FIBER PLACEMENT (AFP) METHOD, AUTOMATED FIBER PLACEMENT DEVICE AND AUTOMATED FIBER PLACEMENT (AFP) METHOD**

(71) Applicant: AIRBUS Operations GmbH, 21129 Hamburg (DE); Airbus SAS, 31700 Blagnac Cedex (FR)
(72) Inventor: WOLF, Johannes, 21129 Hamburg (DE); KOLBE, Andreas, 21129 Hamburg (DE); HÜBNER, Fabian, 31700 Blagnac Cedex (FR); BEIER, Uwe, 31700 Blagnac Cedex (FR)
(74) Representative: Isarpatent

(57) **Abstract**

The present invention provides a tape structure (102) for use in automated fiber placement (AFP) method to manufacture a composite structure (100), the tape structure (102) comprising a first layer (111) and a second layer (112) connected to the first layer (111) with the first layer (111) being configured as a support layer and the second layer (112) being configured as a pre-impregnated layer, wherein the first layer (111) is removable from the second layer (112) during or after placement of the second layer (112) on the composite structure (100) to be manufactured, an automated fiber placement device (130) an automated fiber placement (AFP) method and a composite structure (100) manufactured in the method.

## Description

The present invention pertains to a tape structure for use in an automated fiber placement (AFP) method, an automated fiber placement device and method.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft.

Large scale composite structures such as wings or fuselage of aircrafts, but not limited thereto, are manufactured in automated fiber placement (AFP) methods. Therein tapes, also referred to as slit-tapes, are used to build up a laminate structures comprising several layers of pre-impregnated fiber containing matrices. The tapes with a predetermined width can be derived from a broader prepreg sheet. The slitting is used to ensure edge and width quality and prevent gaps or overlays in the tapes parallelly draped during processing.

Automated fiber placement is often used to manufacture light weight structures, in particular carbon fiber reinforced plastics (CFRP) tanks that are favored over aluminum tanks for enhances performance in cryogenic environments required to store liquid hydrogen (LH2). Materials used in such tank structures have lower layer thickness preferably of less than 100 µm instead of 125 to 250 µm of standard aerospace prepreg materials. Since hydrogen must be stored liquid at -253°C to achieve viable volumetric energy densities in particular in an aircraft, tanks having more different layers are prevented from microcracking in cryogenic environments.

Thinner layers or plies are very sensible in processing as contact to edges of the tapes harms the edge quality and as such the overall tape width. Laminate homogeneity without ondulations or gaps is crucial to reach highest composite performance, especially in the aforementioned cryogenic environments associated to storage of LH2.

Against this background, it is an object of the present invention to find a tape configuration and manufacturing method that enables high quality when handling processing-sensitive materials such as carbon fiber reinforced plastics (CFRP) and to ensure high quality in laminates and structures manufactured from these materials.

This object is achieved by a tape structure for use in an automated fiber placement method having the features of claim 1, a fiber placement device having the features of claim 7 and an automated fiber placement method according to claim 10.

According to a first aspect of the invention, a tape structure for use in automated fiber placement (AFP) method to manufacture a composite structure is provided. The tape structure comprises a first layer and a second layer connected to the first layer wherein the first layer is configured as a support layer and the second layer is configured as a layer comprising a matrix having fibers, preferably reinforcing fibers embedded therein. The first layer is configured to be removable from the second layer during or after placement of the second layer on the composite structure to be manufactured in an automated fiber placement (AFP) process. The tape structure has the advantage to allow automated processing of tapes with second layers having a layer thickness of less than 100µm. In the tape structure the first layer supports the second layer and prevents the second layer and the overall tape structure from curling, u-shaping, and flipping during processing. The first layer also reduces the warping of the second layer, in particular when the tape structure is processed and handled over various spools in an automated fiber placement (AFP) device. The first layer also prevents width variations occurring due to tension applied to the second layer during unwinding and processing and ensures high edge quality in the second layer. Furthermore, the tape structure also allows for processing of tape structures comprising second layers generated from sticky or tacky resins as the first layer separates the layers when the tape structure is wound on a spool. It is an advantage of the invention that it allows for the manufacturing of high-quality laminates from thin-ply layers having a thickness of individual layers of preferably less than 100µm with high edge quality in particular for cryogenic environments.

In connection with the present invention the first layer can consist of or comprise a polymer, preferably polyester, polyethylene or polypropylene, without limiting the invention thereto. The second layer can preferably comprise reinforcing fibers, such as carbon fibers embedded in a non-cured thermosetting matrix preferably consisting of epoxy resin, without limiting the invention thereto.

A further aspect of the invention lies in a fiber placement device, having a moveable laying head for fiber deposition in an automated fiber placement (AFP) method. The fiber placement device comprises a deposition device for placing and/or compacting the tape structure on a composite structure or a previous laminated layer formed on the composite structure, a feeding device for feeding a tape structure by using feeding means such as transport rollers, a peeling device to grab and peel the first layer off the tape structure from the second layer on or after placement and/or compaction, and a winding device to wind the peeled first layer. In the invention device the feeding device, the peeling device and the winding device are positioned adjacent to the laying head and configured to move together with the laying head and the tape structure during automated fiber placement. The device has the advantage that thin-ply materials, that are in particular favored for cryogenic composite tanks, can be processed. Furthermore, with the device tape structures, comprising sticky or tacky resins in the second layer, can be placed with enhanced accuracy and performance as sticking of the second layer to rollers or devices is prevented by the first supportive layer. Since the feeding device, the peeling device for grabbing the first layer and peeling or tearing it of the second layer and the winding device are positioned in close proximity of the deposition device for placing and/or compacting the tape structure, the first support layer is removed from the second layer shortly before or even during or after placing the second layer on the composite structure. This ensures dimensional stability of the placed second layer as warping of in particular the second layer is eliminated even when the tape structure it is processed and handled over various spools in the automated fiber placement process and device. This significantly reduces gaps and/or overlays in laminates, which are known to cause ondulations or resin rich zones that are susceptible for microcracks in the composite structure or laminates.

A further aspect of the invention lies in a method of automated fiber placement (AFP) using a tape structure according to the invention wherein the method comprises the method steps of feeding the tape structure to a fiber placement device, placing the tape structure on a composite structure or a previous laminated layer formed on the composite structure by moving the fiber placement head over the composite structure or the previous laminated layer, compacting the tape structure to establish a permanent connection between the second layer and the composite structure or a previous laminated layer, peeling the first layer off the second layer before, during or after placement and removing the first layer. This has the advantage that the second layer made of a pre-impregnated material and the first, support layer is made from a liner material or foil which has the exact width of the second layer is transferred safely and accurately to the position of placement. The first, support layer as such prevents the material from having strong gaps, ondulations or width differences during or after placement. The first, support layer is peeled of the second layer in the peeling device only at the very end close to placement to a composite structure or a previous laminated layer on the structure, instead of peeling it e.g. in a spool creel, already. Additionally, the method enables handling of toughened and other matrix systems which usually have high tackiness or stickiness and tend to block the machine easily if not supported on a first layer or liner. It is also encompassed, that the laying head is positioned stationary and the composite structure is moved with respect to the laying head.

A further aspect of the invention lies in a composite structure manufactured in the invention method, wherein the composite structure is an aircraft part, in particular a tank structure containing a liquid, preferably a liquid stored under cryogenic conditions such as liquid hydrogen (LH2). This has the advantage that laminates made from composite material for aviation due to high strength/weight ratio can be manufactured that have reduced susceptibility for microcracks in the composite structure or laminates.

Advantageous embodiments and further developments are apparent from the further dependent claims and from the description with reference to the figures.

According to another aspect of the invention, the first layer is formed by a support liner or foil, preferably consisting of or comprising a polymer, preferably polyester, polyethylene or polypropylene and the second layer comprises a thermosetting matrix consisting of an uncured thermosetting polymer consisting of a mixture of resins and curing agents, optional additives and a plurality of fibers, preferably carbon fibers embedded therein. This has the advantage that slit-tape layers with a thermosetting matrix can be used that is kept as thin as possible. Furthermore, using a tape structure with a first support layer also keeps the edge quality of the tapes accurately and enhances overall structural quality of the laminate and/or composite structure produced therewith.

According to an embodiment of the invention the second layer comprises unidirectional pre-impregnated dry fibers. This has the advantage that the material in the manufactured composite structure is prevented from cracking in particular in cryogenic environments or environments which require extended load carrying capacities and that are susceptible to crack formation and crack propagation.

According to a further embodiment of the invention the second layer has a thickness of preferably less than 100µm, in particular a thickness less than 70 µm, preferably a thickness of between 30µm and 80µm. It is an advantage of the tape structure that the first layer of the tape structure supporting the second layer during handling until placement prevents the second layer from curling, u-shaping, and flipping. The first layer also prevents width variations in the second layer by elimination tensile stress applied to the second layer during feeding to the position of placement on a composite structure and to thus achieve high laminate homogeneity without ondulations or gaps which is crucial to reach highest composite performance.

According to a further embodiment of the invention the second layer is positioned in the tape structure facing the structure to be manufactured during placement. This has the advantage, that the first layer, i.e. the liner or foil that is peeled of right in particular before the second layer is placed and compressed on the composite structure or the previous laminated layer, supports the second layer until it is placed in the final position and as such avoids sticking to compaction and placement devices as well as to roller bars.

According to a further embodiment of the invention the tape structure is provided on a spool. The invention tape structure has the advantage that the first layer prevents the layers of the tape from sticking together as soon as the tape structure is wound onto the spool. This is of particular advantage in tapes with a second layer having a thickness of below 100µm and a toughened or other matrix system with high tackiness. The first layer configured as a liner or foil also supports unwinding of the tape before or during placement and prevents the tape from curling, u-shaping and/or flipping and sticking during unwinding.

According to a further embodiment of the invention the feeding device of the fiber placement device comprises a first spool carrying the tape structure and the winding device comprises a second spool carrying the peeled first layer. This has the advantage that the tape structure can be unwound from the first spool and, while the second layer is placed on a composite structure or a previous layer, the first layer can be peeled and removed from the structure and is prevented from interfering in the placement process and with manufactured composite structure.

According to a further embodiment of the invention the deposition device comprises a compaction roller for establishing a permanent connection between the second layer and the composite structure or a previous laminated layer formed on the composite structure. The compaction roller is configured to apply at least one of pressure, heat, and electrical current to the tape structure during or after placement. This has the advantage that placement efficiency is increased and highest quality of the laminates is achieved by preventing gaps and overlays which would disturb the laminate homogeneity in particular when a thermoplastic or thermosetting polymer is used as a matrix of the second layer.

According to a further embodiment of the invention, a heating device is positioned adjacent to the laying head and configured to apply heat to the tape structure before, during and/or after placement. It is an advantage of this embodiment, that the application of heat can be focused to the position of placement i.e. the region where a connection between the second layer and the composite structure or a previous layer is established during placement. The use of heating device positioned adjacent to the laying head can increase efficiency of heat transfer and reduce overall energy consumption of the device.

According to a further embodiment the method further comprises providing the tape structure by winding it from a first spool and winding the first layer on a second spool after removal from the second layer. It is an advantage of this embodiment, that the first layer prevents curling, warping, or flipping or u-shaping of the second layer while feeding the tape structure until the end of the placement process. The first layer also prevents the second layer from sticking to the compaction rollers or other parts of device during feeding and placement. To avoid interference of the first layer with the composite structure after placement of the second layer the second spool immediately winds and removes the first layer from the region of placement after placement of the second layer is completed.

According to a further embodiment the method further comprises moving the fiber placement head over the composite structure or a previous laminated layer in a direction forming an angle with an edge of the composite structure or a previous laminated layer. It is an advantage that the second layer of the tape structure can be placed in different angles to achieve quasi-isotropy of anisotropic fiber direction properties in the manufactured composite structure using the advantages of the placement method and tape structure.

According to a further embodiment the method further comprises applying at least one of pressure, heat, and electrical current to the tape structure before, during or after placement. It is an advantage that placement efficiency is increased and highest quality of the laminates is achieved by preventing gaps and overlays which would disturb the laminate homogeneity in particular when a thermoplastic or thermosetting polymer is used as a matrix of the second layer.

The invention will be explained in greater detail with reference to exemplary embodiments depicted in the drawings as appended.
- Fig. 1a, b, c: schematically depicts views of a tape without a structure according to an embodiment of the invention;
- Fig. 2: schematically depicts a view of a tape structure according to an embodiment of the invention;
- Fig. 3: schematically depicts an embodiment of the invention placement device; and
- Fig. 4: schematically depicts a perspective view of a composite structure according to another embodiment of the invention during manufacturing.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

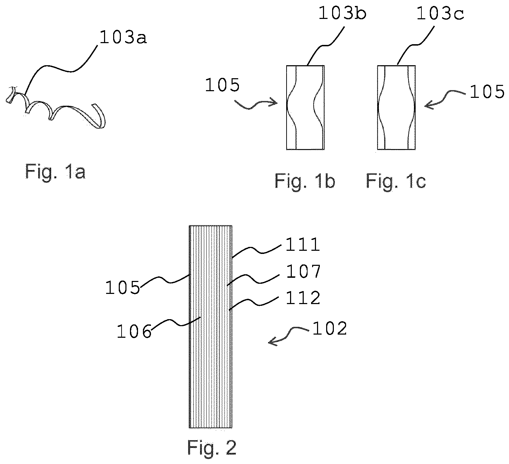

Fig. 1a, b and c depict a cut-out section of a tapes 103a, b, c used in automated fiber placement methods that are not provided with a tape structure 102 according to the invention. As illustrated, thin-ply or tape materials configured as thin ply slit-tapes with layer thickness of preferably less than 100µm tend to curl and flip as shown in Fig. 1a during processing, if the tape 103a, b, c is processed and handled over various spools 104a, b in an automated fiber placement (AFP) device 130 or over long distances.

Tapes 103a, b, c with thinner plies are very sensible in processing and susceptible to impairment of ply edges 105 that significantly impacts edge 105 quality and as such the overall tape 103a, b, c quality. As shown in Figures 1b and 1c, the edges 105 can have dimensional or width variations that can lead to ondulations or gaps when the tapes 103a, b, c are placed. This will reduce overall laminate 101 homogeneity. Homogeneity of laminate 101 is however crucial to reach highest composite performance, especially in cryogenic environments such as storing and handling liquid hydrogen (LH2). Tapes 103a, b, c also referred to as slit-tapes used in particular in manufacturing LH2 tank 120 structures have lower layer thickness of preferably less than 100µm instead of 125 to 250µm compared to standard prepreg materials. Use of a plurality of layers 112 placed in a staggered configuration prevents microcracking in cryogenic environments.

Fig. 2 schematically depicts a section of a tape structure 102 according to an embodiment of the invention. The tape structure 102 can be used in automated fiber placement (AFP) methods to manufacture multi-layered composite structures 100. The tape structure 102 comprises a first layer 111 and a second layer 112, wherein the second layer 112 is placed on the first layer 111 that adheres to the second layer 112 during handling and storing of the tape structure 102 in particular on a spool 104a. The first layer 111 is configured as a support layer manufactured from a liner or foil preferably consisting of or comprising a polymer, preferably polyester, polyethylene or polypropylene, whereas the second layer 112 is configured as a prepreg layer having a thermosetting matrix 106 consisting of an uncured thermosetting polymer or epoxy comprising a mixture of a resins and curing agents, optional additives and a plurality of fibers 107, preferably carbon fibers embedded therein. The fibers 107 are provided as unidirectional dry fibers 107. The first layer 111 is removable from the second layer 112 during or after placement of the second layer 112 on a composite structure 100 manufactured in an automated fiber placement (AFP) method. The tape structure 102 of Fig. 2 allows for automated processing of thin ply slit-tapes with layer thickness in the second layer 112 of less than 100µm. The first layer 111 supports the second layer 112 and prevents the tape structure 102 from curling, u-shaping, and flipping during processing. The first layer 111, that remains combined with the second layer 112 during feeding the tape structure 102 to a region of placement 201 during manufacture reduces the warping of the tape structure 102 in particular when it is processed and handled over various spools 104a, b in an automated fiber placement (AFP) device 130. The first layer 111 also prevents width variations and impairment of tape edges 105 occurring due to tension applied to the second layer 112 during unwinding and processing and as such enhances overall composite structure 100 quality. Furthermore, the tape structure 102 also allows processing of slit-tapes generated from sticky or tacky resins since the first layer 111 separates the second layers 112 when the tape structure 102 is wound on a spool 104a, b and also prevents the second layer 112 from sticking to roller bars. In addition, the tape structure 102 with a support by a first layer 111 also protects the edge quality of the second layer 112.

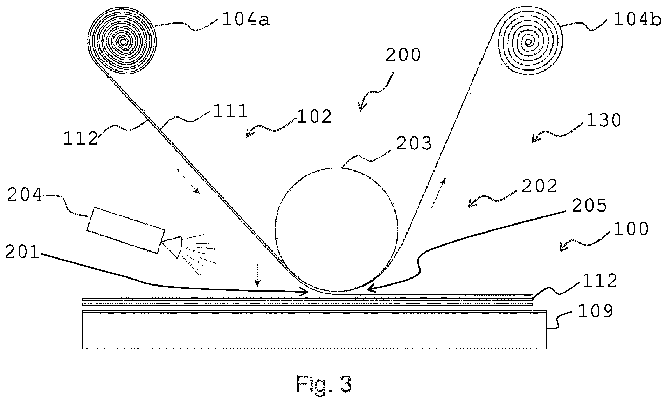

Fig. 3 schematically depicts an embodiment of the invention automated fiber placement device 130. Fig. 3 also schematically depicts the manufacturing process of a composite structure 100 comprising several layers 112 of pre-impregnated material disposed one over the other. As a basis a mould or tool 109 is used, that defines the final structure and geometry of the composite structure 100. Layers 112 of pre-impregnated material are placed on the tool 109 to manufacture the final composite structure 100. Placing of a plurality of the slit-tape layers 112 will increase the thickness of the composite structure 100 until final configuration is achieved. In Fig 3 the invention tape structure 102 is used, comprising a first layer 111 and a second layer 112 wound to a first spool 104a. The tape structure 102 has a predetermined width that can be selected for example from a range of between ⅛" (3,175mm) to ½" (12,7mm). The tape structure 102 is usually provided as a slit-tape manufactured from a broader prepreg laminate 101 or structure. The tape structure 102 comprises a first layer 111 and a second layer 112. The first layer 111 provides a support for the second layer 112 while the tape structure 102 is stored wound on the first spool 104a and further during the tape structure 102 is fed from there to the region of placement 201 in a laying head 200 for layer deposition in an automated fiber placement (AFP) device 130. Fig 3 only schematically depicts the laying head 200 by focusing on the deposition device 202 comprising a compaction roller 203. A further device annexed to or positioned adjacent to the compaction roller 203 is a peeling device (not shown) that ensures a separation of the two layers 111, 112 of the tape structure 102 shortly before or during placement of the second layer 112 on the tool 109 or a previously formed layer 112 of pre-impregnated material in the composite structure 100 by grabbing the first layer 111 and peeling or tearing it of the second layer 112 affixed to the composite structure 100. In the peeling device the first layer 111 of the tape structure 102 is removed by peeling it from the second layer 112 while passing the peeling device. The tape structure 102 in its double layer configuration is fed to the laying head 200 with the second layer 112 of pre-impregnated material facing the composite structure 100 or tool 109. After placement, the second layer 112 adheres to the previous layer 112 or the composite structure 100 whereas the first layer 111 that supported the second layer 112 during feeding is removed and wound to a second spool 104b annexed to the laying head 200 or the automated fiber placement device 130.

While the first layer 111 is provided as liner or foil, the second layer 112 comprises a thermosetting matrix 106 consisting of an uncured thermosetting polymer with a plurality of fibers 107 embedded therein. The uncured thermosetting polymer comprises a mixture of a resins and curing agents and optionally additional additives and the embedded fibers 107 used are unidirectional pre-impregnated dry fibers 107 such as carbon fibers. The second layer 112 has a thickness of preferably less than 100µm, in particular a thickness of less than 70 µm, preferably a thickness of between 30µm and 80µm and is as such susceptible to warping or curling. The automated fiber placement device 130 as illustrated in Fig. 3 also comprises a heater 204 that is positioned in close proximity to the region of placement 201 of the second layer 112. Applying heat enhances the connection between the newly fed layer 112 and the previously laid layers 112 in the composite structure 100. As an alternative or a second source of heat the compaction roller 203 can be configured as a heated roller. The compaction roller 203 applies pressure onto the tape structure 102 while moving over the composite structure 100 and thus presses the newly placed layer 112 to the previous one thereby establishing a connection between the layers 112. The tape structure 102 is continuously fed to the compaction region 205 beneath the compaction roller 203 and remains in the manufactured composite structure 100 whereas the first layer 111 is removed or peeled from the second layer 112 and wound onto the second spool 104b. The first layer 111 not only stabilizes the very thin prepreg material of the second layer 112 but also prevents the second layer 112 from sticking to the compaction roller 203 or the overlaying layer on the first spool 104a. Furthermore, the first layer 111 prevents the tape structure 102 from sticking to other devices in the laying head 200 that contact the tape structure 102 during feeding and processing. Since thinner plies or layers 112 are very sensible in processing in particular in the edge regions, every contact to the tape edge 105 impacts the edge quality and as such the overall tape width, which can result in gaps in the laminate 101 of the composite structure 100. The tape structure 102 supports laminate homogeneity to be achieved without ondulations or gaps to thus reaching highest composite performance.

The laying head 200 of Fig. 3 is moveable together with the tape structure 102 comprising the first layer 111 and the second layer 112 during fiber 107 or layer 112 placement and configured to move over the composite structure 100 or a previous laminated layer 112 in a direction forming an angle with an edge region 110 of the composite structure 100 or a previous laminated layer 112. By laying the second layer 112 in different angles quasi-isotropy of anisotropic fiber direction properties is achieved. Consequently, placement efficiency is increased and highest quality of the laminates 101 is achieved by preventing gaps and overlays which would disturb the laminate 101 homogeneity.

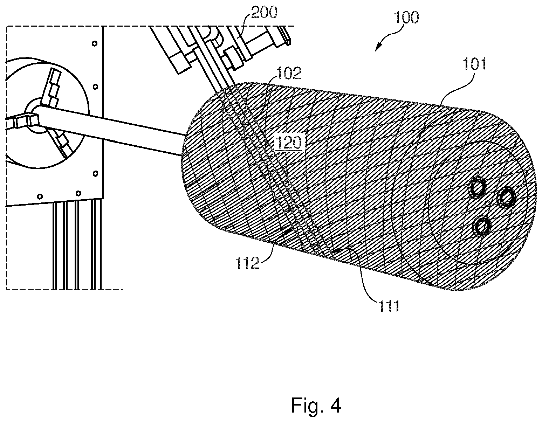

Fig. 4 schematically depicts a perspective view of a composite structure 100 manufactured in a method according to an embodiment of the invention during manufacturing. In this embodiment, the composite structure 100 is configured as a tank 120 having a cylindrical geometry, without being limited thereto. The tank 120 is in some circumstances used for the storage of liquid hydrogen (LH2) under cryogenic conditions and consists of a composite material or laminate, in particular when used in the aircraft industry due to the requirement of weight saving. Use of composite materials or laminates 101 is preferred for aviation purposes due to high strength-to- weight ratios. As shown in Fig. 4 the composites structure 100 configured as a tank 120 for aviation is manufactured in automated fiber placement methods to achieve highest manufacturing quality and fulfill specific requirements with respect to leakage protection. The layers 112 used in the manufacture of the tank 120 form composites comprising special resins and fibers 107 and are manufactured in a specific laying method to withstand cryogenic temperatures. Tapes are placed under different angles to achieve quasi-isotropy of anisotropic fiber direction properties.

During manufacture the laying head 200 of the automated fiber placement device 130 together with the tape structure 102 comprising the first layer 111 and the second layer 112 moves over the tank 120 and places the second layer 112 of the tape structure 102. The tape structure 102 comprising pre-impregnated unidirectional fibers 107 is placed in different angles with respect to the previous layer or tape. The tape structure 102 used herein has a structure comprising two layers 111, 112. A first layer 111 forming a support layer is configured or provided as a liner or foil covering the surface of the second layer 112. The tape structure 102 is provided in a spool 104a (not shown) and fed to the laying head 200 while moving over the tank 120. In the laying head 200 a peeling device is provided that removed the first layer 111 shortly before, during or after placement of the second layer 112 on the tank 120.

The second layer 112 comprises a matrix 106 of thermoplastic or uncured thermosetting polymer provided as a mixture from a resin and a curing agent faces the tank 120. Since the material of the matrix 106 is very sticky and hard to handle in automated processing the first, support layer 111 significantly enhances manufacturing efficiency by supporting the second layer 112 during feeding and by preventing it from sticking to devices of to the laying head 200 or the automated fiber placement device 130.

To prevent material from cracking in cryogenic environments, the second layer 112 has a thickness of less than 100µm. Since these tapes are susceptible to curling, warping or ondulation if not supported during processing, the tape structure 102 is fed to the end of the laying head 200 and the first layer 111 is kept in place until the second layer 112 is compressed on the composite structure 100 and/or the previous laminated layer 112. During processing, the first layer 111 also ensures the edge quality of the second layer 112.

The tape structure 102 shown in Fig. 4 has a tape width of e.g. ½" (12.7 mm). The second layers 112 forming the laminate 101 of the composite structure 100 follow a precision of e.g.±1% and highest quality of the laminate 101 is hence achieved. With the laying head 200 moving over the composite tank 120 gaps and overlays of second layers 112 that would disturb laminate homogeneity are avoided. The tank 120 manufactured as described before has a laminate 101 homogeneity without ondulations or gaps which is crucial to reach highest composite performance especially in cryogenic environments such as in storage of LH2.

After finalization of tape placement, the composite tank 120 is cured under temperatures of between 100 and 200 °C under autoclave conditions to reach high final laminate quality. The laying head 200 as shown in Fig 4 can also be used for manufacturing alternative composite structures such as pipes and pumping.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: composite structure
- 101: laminate
- 102: tape structure
- 103a, b, c: tape
- 104a,b: spool
- 105: edge
- 106: matrix
- 107: fiber
- 109: tool
- 110: edge region
- 111: first layer
- 112: second layer
- 120: tank
- 130: automated fiber placement device
- 200: laying head
- 201: region of placement
- 202: deposition device
- 203: compaction roller
- 204: heater
- 205: compaction region

## Claims

1. Tape structure (102) for use in automated fiber placement (AFP) method to manufacture a composite structure (100), the tape structure (102) comprising a first layer (111) and a second layer (112) connected to the first layer (111) with the first layer (111) being configured as a support layer and the second layer (112) being configured as a pre-impregnated layer, wherein the first layer (111) is removable from the second layer (112) during or after placement of the second layer (112) on the composite structure (100) to be manufactured.

2. Tape structure (102) according to claim 1, wherein the first layer (111) is formed by a support liner or foil preferably consisting of or comprising a polymer, preferably polyester, polyethylene or polypropylene and the second layer (112) comprises a thermosetting matrix (106) consisting of an uncured thermosetting polymer comprising a mixture of resins and curing agents and optionally additives and a plurality of fibers (107), preferably carbon fibers embedded therein.

3. Tape structure according to any of claims 1 or 2, wherein the second layer (112) comprises unidirectional pre-impregnated dry fibers (107).

4. Tape structure according to any of claims 1 to 3, wherein the second layer (112) has a thickness of preferably less than 100µm, in particular a thickness of less than 70 µm, preferably a thickness of between 30µm and 80µm.

5. Tape structure (102) according to any of claims 1 to 4, wherein the second layer (112) is positioned in the tape structure (102) facing during placement the composite structure (100) to be manufactured.

6. Tape structure (102) according to any of claims 1 to 5, wherein the tape structure (102) is provided on a spool (104a, b).

7. Automated fiber placement device (130) having a moveable laying head (200) for fiber (107) placement in an automated fiber placement (AFP) method, comprising:
- a feeding device for feeding the tape structure (102) according to any of claims 1 to 6 to a region of placement (201),
- a deposition device for placing and/or compacting the tape structure (102) on a composite structure (100) or a previous laminated layer (112) formed on the composite structure (100),
- a peeling device to peel the first layer (111) off the second layer (112) on or after placement and/or compacting, and
- a winding device to wind-up the peeled first layer (111),
wherein the feeding device, the peeling device and the winding device are positioned adjacent to the laying head (200) and configured to move together with the laying head (200).

8. Automated fiber placement device (130) according to claim 7, wherein the feeding device comprises a first spool (104a) carrying the tape structure (102) and the winding device comprises a second spool (104b) for winding the first layer (111) after peeling.

9. Automated fiber placement device (130) according to claim 7 or 8, wherein deposition device comprises a compaction roller (203) for establishing a permanent connection between the second layer (112) and the composite structure (100) or a previous laminated layer (112) formed on the composite structure (100) with the compaction roller (203) being configured to apply at least one of pressure, heat, and electrical current to the tape structure (102) and/or the second layer (112) during or after placement.

10. Automated fiber placement device (130) according to any claim 7 to 9, comprising a heating device (204) positioned adjacent to the laying head (200) and configured to apply heat to the tape structure (102) before, during and/or after placement.

11. Automated fiber placement (AFP) method using a tape structure (102) according to any of claims 1 to 6, comprising feeding the tape structure (102) to an automated fiber placement device (130), placing the tape structure (102) on a composite structure (100) or a previous laminated layer (112) formed on the composite structure (100) by moving a laying head (200) over the composite structure (100) or the previous laminated layer (112), compacting the tape structure (100) to establish a permanent connection between the second layer (112) and the composite structure (100) or a previous laminated layer (112), peeling the first layer off (111 the second layer (112) on or after placement and removing the first layer (111).

12. Method according to claim 11, wherein the method further comprises providing the tape structure (102) by winding from a first spool (104a) and winding the first layer (111) on a second spool (104b) after removal form the tape structure (102).

13. Method according to any of claims 11 or 12, wherein moving the laying head (200) includes moving the laying head (200) over the composite structure (100) or a previous laminated layer (112) in a direction forming an angle with an edge region (110) of the composite structure (100) or a previous laminated layer (112).

14. Method according to any of claims 11 to 13, wherein at least one of pressure, heat, and electrical current is applied to the tape structure (102) before, during or after placement.

15. Composite structure (100) manufactured in a method according to any of claims 11 to 14, wherein the composite structure (100) is an aircraft part, in particular a tank (120) structure containing a liquid, preferably a cryogenic stored liquid such as liquid hydrogen (LH2).
